# EUROPÄISCHE PATENTSCHRIFT

(11) **EP 1 597 072 B1**
(45) Veröffentlichungstag und Bekanntmachung des Hinweises auf die Patenterteilung: **13.02.2008**
(21) Anmeldenummer: 04713009.1
(22) Anmeldetag: 20.02.2004
(51) Int. Cl.: B32B 27/32

(54) **Verwendung einer metallisierten, opaken Folie mit Barriereeigenschaften.& x9;**
Use of a metalised opaque film with barrier properties.& x9;
Utilisation d'une feuille opaque metallisée à propriétés barrière

(30) Priorität: 20.02.2003 DE 10307133; 26.11.2003 DE 10355231
(43) Veröffentlichungstag der Anmeldung: 23.11.2005
(73) Patentinhaber: Treofan Germany GmbH & Co.KG, 66539 Neunkirchen (DE)
(72) Erfinder: HÜTT, Detlef, 66265 Heusweiler (DE); DÜPRE, Yvonne, 67661 Kaiserslautern (DE); KOCHEM, Karl-Heinz, 66539 Neunkirchen (DE); SCHEIDECKER, Dieter, 65343 Eltville (DE)
(74) Vertreter: Kremer, Viola
(86) Internationale Anmeldenummer: PCT/EP2004/001681
(87) Internationale Veröffentlichungsnummer: WO 2004/073980

(56) Entgegenhaltungen:
- EP-A- 0 361 280
- WO-A-01/85447
- WO-A-02/45956
- DE-A- 3 933 695

## Beschreibung

Die vorliegende Erfindung betrifft die Verwendung einer metallisierten opaken Polypropylenfolie zur Herstellung von Barriereverpackungen und zur Herstellung von Laminaten..

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folien dem Anwender eine höhere Ausbeute auf Grund der reduzierten Dichte dieser Folien.

Trotz dieser Vielfalt günstiger Eigenschaften gibt es noch heute Bereiche in denen die Polypropylenfolie mit anderen Materialien kombiniert werden muß, um bestimmte Defizite auszugleichen. Insbesondere für feuchtigkeits- und sauerstoffempfindliche Füllgüter konnten sich Polypropylenfolien als alleiniges Verpackungsmaterial bisher nicht durchsetzen. Beispielsweise spielt im Bereich der Snack Verpackung sowohl die Wasserdampfbarriere als auch die Sauerstoffbarriere eine entscheidende Rolle. Bei einer Wasseraufnahme von nur etwa 3% werden Kartoffelchips und andere Snackartikel so pappig, daß der Verbraucher sie als ungenießbar empfindet. Zusätzlich muß die Sauerstoffbarriere sicherstellen, daß die in den Snackartikeln enthaltenen Fette nicht durch Photooxidation einen ranzigen Geschmack entwickeln. Diesen Anforderungen genügt die Polypropylenfolie alleine als Verpackungsmaterial nicht.

Noch problematischer sind die Barriereeigenschaften von Polypropylenfolien mit einer vakuolenhaltigen Basisschicht, da bei diesen Typen die Vakuolen in der Basisschicht die Wasserdampfbarriere zusätzlich beeinträchtigten. Beispielweise beträgt die Wasserdampfbarriere einer transparenten biaxial orientierten Polypropylenfolie von 25 µm ca. 4,4 g/m² * Tag bei 38°C. Einen vergleichbaren Barrierewert erreicht man bei einer opaken Folie mit vakuolenhaltiger Basisschicht erst ab einer Dicke von 35 µm. Die Sauerstoffbarriere ist sowohl bei transparenten als auch bei opaken Polypropylenfolien für viele Anwendungen völlig unzureichend (>2000 cm³/m²*Tag*bar).

Es ist bekannt die Barriereeigenschaften von boPP durch eine Metallisierung zu verbessern, wodurch sowohl die Wasserdampf- als auch die Sauerstoffdurchlässigkeit erheblich erniedrigt wird. Opake Folien kommen bei der Metallisierung in der Regel nicht zum Einsatz, da deren Barriere ohne Metallisierung wesentlich schlechter ist als die einer transparenten Basisfolie. Es wurde bisher davon ausgegangen, daß die Barriere der metallisierten Folien umso besser ist, je besser die Barriere der Grundfolie vor der Metallisierung ist. Beispielsweise kann die Sauerstoffdurchlässigkeit einer transparenten 20µm boPP Folie durch Metallisierung und Laminierung mit einer weiteren 20µm transparenten Folie auf ca. 40 cm³/m² * Tag * bar reduziert werden. (siehe VR Interpack 99 Special D28 "Der gewisse Knack").

In einigen Anwendungsbereichen soll die gute Barriere, wie man sie von transparenten metallisierten Folien kennt mit der speziellen opaken Optik der vakuolenhaltigen Folien kombiniert werden, d.h. eine metallisierte opake Barrierefolie zur Verfügung gestellt werden. Um die bekannten schlechten Barriere-Ausgangswerte von opaken Folien auszugleichen, werden vor der Metallisierung Barriere-Beschichtungen, beispielsweise aus PVOH, PVDC, EVOH aufgebracht, um die Durchlässigkeit des zu metallisierenden Substrats zu erniedrigen. Nach Metallisierung auf der Beschichtung können hervorragende Barrierewerte auch bei opaken Folien erreicht werden. Diese Lösungen sind jedoch sehr teuer, da zwei teure Veredlungsschritte notwendig sind.

In einigen Anwendungen werden boPP-Folien auch nur im Hinblick auf den optischen Eindruck metallisiert. Hier soll beim Verbraucher der Eindruck einer hochwertigen Verpackung entstehen, ohne daß tatsächlich eine bessere Barriere vorliegt. In diesen Fällen sind die Anforderungen an die metallisierte Folie vergleichsweise unkritisch. Die metallisierte Folie muß nur eine gleichmäßige Optik und eine hinreichende Metallhaftung aufweisen. Die erzielte Barriere spielt keine Rolle und ist durch die Metallisierung nur unwesentlich verbessert.

DE 39 33 695 beschreibt eine nicht siegelbare Folie aus einer Basisschicht aus Polypropylen und mindestens einer Deckschicht, die aus einem speziellen Ethylen-Propylen-Copolymeren aufgebaut ist. Dieses Copolymere zeichnet sich durch einen Ethylengehalt von 1,2 bis 2,8 Gew.-% und einen Verteilungsfaktor von >10 und eine Schmelzeenthalpie von > 80 J/g und einen Schmelzindex von 3 bis 12 g/10min (21,6N und 230°C) aus. Es ist beschrieben, daß die Eigenschaften des Copolymeren zur Verbesserung der Bedruckbarkeit und der optischen Eigenschaften in diesen engen Grenzen gehalten werden müssen. Diese Schrift bezieht sich insgesamt auf transparente Folien.

WO 01/85447 beschreibt eine mehrschichtigen Polyolefinfolie aus mindestens einer polyolefinischen Schicht und einer Haftschicht als Außenschicht. Diese Haftschicht enthält mindestens 50 Gew.-%, bezogen auf das Gewicht der äußeren Schicht, eines Maleinsäureanhydrid modifizierten Polyolefins. Es sind opake und transparente Ausführungsformen beschrieben. Die Folie weißt sehr gute Hafteigenschaften bei Bedruckung, Metallisierung oder Beschichtung auf. Barriereeigenschaften der Folie und spezielle Verwendungen werden nicht explizit beschrieben.

WO 02/45956 beschreibt die Verwendung einer biaxial orientierten mehrschichtigen coextrudierten Polyolefinfolie aus einer Basisschicht und mindestens einer inneren Deckschicht als Etikett. Die Basisschicht kann transparent oder opak sein. Die innere Deckschicht enthält mindestens 70 Gew.-% eines Co- oder Terpolymeren, welches aus Olefin und ungesättigter Carbonsäure oder deren Estern oder deren Anhydrid und höchstens 30 Gew.-% eines Zusatzstoffes, jeweils bezogen auf das Gewicht der inneren Deckschicht. Es ist angegeben, daß die Folie metallisiert werden kann Die Folie wird auf Grund guter Hafteigenschaften der inneren Deckschicht als Etikett verwendet. Weitere Verwendungsmöglichkeiten für diese Folie sind nicht beschrieben.

Der vorliegenden Erfindung lag die Aufgabe zu Grunde eine Folie mit guter Barriere gegenüber Sauerstoff und Wasserdampf zur Verfügung zu stellen. Selbstverständlich müssen auch ansonsten die üblichen Gebrauchseigenschaften der Folie im Hinblick auf ihre jeweilige Verwendung erhalten bleiben.

Die der Erfindung zugrundeliegende Aufgabe wird gelöst durch die Verwendung einer metallisierten, coextrudierten, mehrschichtigen, biaxial orientierten Polypropylenmehrschichtfolie zur Herstellung einer Verpackung mit einer Barriere gegenüber Wasserdampf und Sauerstoff, welche eine vakuolenhaltigen Basisschicht aufweist, wobei diese vakuolenhaltige Basisschicht durch eine oder mehrere Schichten abdeckt ist und die Dicke dieser abdeckenden Schicht oder Schichten insgesamt mindestens 3µm beträgt und die Folie auf der äußeren Oberfläche dieser abdeckenden Schicht oder Schichten metallisiert ist und die metallisierte Folie eine Wasserdampfdurchlässigkeit ≤ 0,5 g/m²*Tag bei 38°C und 90% relativer Luftfeuchte und eine Sauerstoffdurchlässigkeit von ≤50 cm³/m²*Tag*bar bei 23°C und 50% relativer Luftfeuchte, aufweist.

Die der Erfindung zugrundeliegende Aufgabe wird des weiteren gelöst durch die Verwendung einer metallisierte, coextrudierten mehrschichtigen, biaxial orientierten Polypropylenmehrschichtfolie, welche eine vakuolenhaltigen Basisschicht aufweist, wobei diese vakuolenhaltige Basisschicht durch eine oder mehrere Schichten abdeckt ist und die Dicke dieser abdeckenden Schicht oder Schichten insgesamt mindestens 3µm beträgt und die Folie auf der äußeren Oberfläche dieser abdeckenden Schicht oder Schichten metallisiert ist und die metallisierte Folie eine Wasserdampfdurchlässigkeit ≤ 0,5 g/m²*Tag bei 38°C und 90% relativer Luftfeuchte und eine Sauerstoffdurchlässigkeit von ≤50 cm³/m²*Tag*bar (bei 23°C und 50% relativer Luftfeuchte) aufweist, zur Herstellung eines Laminats, wobei die metallisierte Seite der Folie gegen eine weitere Polypropylenfolien oder gegen eine Polyethylenfolie kaschiert wird.

Im Sinne der vorliegenden Erfindung ist die Basisschicht diejenige Schicht der Folie welche mindestens 40%, vorzugsweise mehr als 50% der Gesamtdicke der Folie ausmacht. In einer möglichen Ausführungsform kann eine abdeckende Schicht direkt auf der Basisschicht aufgebracht sein, welche dann die erste Deckschicht der Folie bildet. In dieser Ausführungsform beträgt die Dicke der ersten Deckschicht mindestens 3µm,vorzugsweise 4 bis 8µm. In einer weiteren Ausführungsform können zusätzlich zwischen dieser ersten Deckschicht und der vakuolenhaltigen Basisschicht weitere Schichten angebracht sein, welche dann eine oder mehrere erste Zwischenschicht/en bilden. Deckschichten bilden die Außenschichten der unmetallisierten coextrudierten Folie. In dieser Ausführungsform beträgt die Gesamtdicke aus Deckschicht und Zwischenschicht mindestens 3µm, vorzugsweise 4 - 8 µm, wobei im allgemeinen die Mindestdicke der Deckschicht 0,5µm beträgt und damit die entsprechende Mindestdicke der ersten Zwischenschicht 2,5 µm. Eine zweite optionale Deckschicht auf der gegenüberliegenden Seite der Basisschicht kann unmittelbar auf der Basisschicht aufgebracht sein. Des weiteren gibt es Ausführungsformen bei denen beide Deckschichten auf den Zwischenschichten der Folie aufgebracht sind.

Es wurde gefunden, daß die Folie nach der Metallisierung überraschenderweise eine hervorragende Barriere aufweist, wenn die Basisschicht der Folie vakuolenhaltig ist und durch eine oder mehrere zusätzliche Schicht/en abgedeckt ist und diese Schicht oder Schichten insgesamt eine Dicke von mindestens 3µm aufweist oder aufweisen. Die Metallisierung befindet sich auf der äußeren Oberfläche der ersten Deckschicht.

Überraschenderweise verbessert diese Maßnahme die Barriere der Folie nach Metallisierung erheblich, obwohl an den unmetallsierten opaken Folien keine besonderen Barriereeigenschaften gefunden werden konnten und auch ansonsten keine besonderen Maßnahme, wie z.B. Beschichtungen der coextrudierten, zur Verbesserung des unmetallisierten Substrats ergriffen wurden.

Die opake Folie zeichnet sich durch hervorragende Barrierewerte aus, welche bisher für opake Folien noch nicht realisiert wurden. Die Wasserdampfdurchlässigkeit der erfindungsgemäßen opaken metallisierten Folie liegt im allgemeinen ≤ 0,5 g/m² * Tag bei 38°C und 90% relativer Luftfeuchte, vorzugsweise in einem Bereich von 0,05 bis 0,3 g/m² * Tag. Die Sauerstoffdurchlässigkeit beträgt vorzugsweise ≤ 50 cm³/m²*Tag*bar, vorzugsweise 5 bis 30 cm³/m²*Tag*bar, insbesondere 5 bis 25 cm³/m²*Tag*bar.

Die zu metallisierenden äußere coextrudierte Deckschicht der opaken Folie kann aus isotaktischen Propylenhomopolymeren aus Ethylen-Homopolymeren oder aus Mischpolymerisaten des Propylens oder des Ethylens aufgebaut sein, welche einen geringen Comonomergehalt aufweisen. Im allgemeinen enthält die zu metallisierende erste Deckschicht mindestens 80 Gew.-%, vorzugsweise 85 bis <100 Gew.-%, insbesondere 95 bis 99 Gew.-% der vorstehend genannten Polymeren oder Mischungen aus diesen.

Geeignete Propylenhomopolymere sind isotaktische Propylenhomopolymere welche zu 100 Gew.-%, aus Propyleneinheiten aufgebaut sind und einen Schmelzpunkt von 160°C oder höher, vorzugsweise 162°C, besitzen. Im allgemeinen haben diese Polypropylenhomopolymeren einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 10 Gew.-%, vorzugsweise < 5 Gew.-% stellen bevorzugte Propylenpolymere für die erste Deckschicht dar. Die angegebenen Gewichtsprozente beziehen sich auf das jeweilige Polymere. In weiteren Ausführungsform kann das isotaktische Polypropylen ein hochisotaktisches Polypropylen mit einer Isotaktizität von über 95% sein. Derartige Materialien sind an sich im Stand der Technik bekannt und werden auch als HCPP (high cristallinity Polypropylen) bezeichnet. Gegebenfalls kann ein isotaktisches Polypropylen ausgewählt werden, welches mittels eines Metallocen-Katalysators hergestellt ist. Diese Metallocen-Polypropylene zeichnen sich vorzugsweise durch eine enge Molekulargewichtsverteilung aus (Mw/Mn <2).

Geeignete Polyethylen sind beispielsweise HDPE oder LPDE Polymere, welche in an sich bekannter Weise als zu metallisierende Schichten in boPP Folien eingesetzt werden.

Mischpolymerisate mit einem niedrigen Comonomergehalt enthalten das oder die Comonomere im allgemeinen in einer Menge von <3 Gew.-%, vorzugsweise 0,1 bis 2,5 Gew.-%. Dieser Comonomer Anteil sollte möglichst gut verteilt in die Ketten des Grundpolymeren eingebaut sein, weshalb man diese Mischpolymerisate auch als statische Copolymere oder statisches Terpolymere bezeichnet. Insbesondere sind Propylencopolymeren mit einem niedrigem Ethylengehalt von <2,5 Gew.-% und einem Schmelzpunkt von 150 bis 165°C bevorzugt. Diese Materialien sind an sich bekannt und werden auf Grund ihres vergleichsweise geringen Ethylengehaltes auch als "Minicopo" beschrieben, beispielsweise in EP 0 361 280 oder DE 39 33 695. Beispielsweise haben diese Propylen-Ethylen-Copolymere einen Ethylengehalt von 1,2 bis 2,8 Gew.-%, insbesondere 1,2 bis 2,3 Gew.-%, vorzugsweise 1,5 bis <2 Gew.-% und einen Schmelzpunkt von 150 bis 155°C und eine Schmelzeenthalpie von 90 bis 100J/g und einen Schmelzflußindex von 3 bis 15g/10min, vorzugsweise 3 bis 9g/10min (230°C, 21,6N DIN 53 735). Des weitern können Propylen-Ethylen Copolymere eingesetzt werden die einen Ethylengehalt von <1Gew.-%, vorzugsweise 0,05 bis 0,7 Gew.-%, aufweisen, die beispielsweise in US 5,958,566 beschrieben sind. Grundsätzlich sind auch Propylencopolymere mit einem geringen Butylengehalt von unter 2,5 Gew.-% einsetzbar. Auch diese Polymeren sind an sich bekannt in der Literatur bereits beschrieben und kommerziell erhältlich. Auf die genannten Schriften und die Beschreibung dieser Polymere in diesen Schriften wird hiermit ausdrücklich Bezug genommen.

Neben den vorstehend beschriebenen Polymeren kann die erste Deckschicht übliche Additive wie Antiblockmittel, Stabilisatoren und/oder Neutralisationsmittel in jeweils wirksamen Mengen enthalten. Im Hinblick auf die Metallisierung sollten Additive, die die Metallisierbarkeit beeinträchtigen in der Deckschicht nicht oder nur in geringsten Mengen enthalten sein. Dies gilt beispielsweise für migrierende Gleitmittel oder Antistatika.

Zur Verbesserung der Metallhaftung wird die Oberfläche der ersten Deckschicht im allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten noch nicht metallisierten Deckschicht in einem Bereich von 35 bis 45 mN/m.

Gegebenfalls kann die Abdeckung der Basisschicht auch durch mehrere Schichten erfolgen, d.h. zusätzlich zu der vorstehend beschriebenen ersten Deckschicht ist darunter mindestens eine, gegebenenfalls mehrere Zwischenschichten aus Polyolefinen angebracht ist. Diese erste Zwischenschicht enthält im allgemeinen mindestens 80 Gew.-%, vorzugsweise 95 bis 100 Gew.-%, insbesondere 98 bis <100 Gew.-% Polyolefin. Neben diesem polyolefinischen Hauptbestandteil kann die erste Zwischenschicht Additive wie Stabilisatoren und/oder Neutralisationsmittel, sowie gegebenenfalls Pigmente, z.B. TiO2, in jeweils wirksamen Mengen enthalten. Die Dicke der ersten Zwischenschicht liegt erfindungsgemäß in einem Bereich von 4 bis 10µm, vorzugsweise 5 bis 8µm.

Als Polyolefine für die Zwischenschicht oder Zwischenschichten können grundsätzliche alle vorstehend für die erste Deckschicht beschriebenen Materialien eingesetzt werden. Die Auswahl des Polymeren für die Zwischenschicht ist jedoch vergleichsweise unkritisch und neben diesen beschriebenen Homopolymerisaten oder Co- und Terpolymerisaten mit einem geringen Comonomeranteil sind auch andere Rohstoffe, insbesondere andere Mischpolymerisate einsetzbar, die üblicherweise in biaxial orientierten Folien Verwendung finden. Derartige Mischpolymerisate sind nachstehend im Zusammenhang mit der zweiten Deckschicht und der zweiten Deckschicht ausführlich beschrieben. Unter diesen möglichen Polymeren sind jedoch isotaktisches Propylenhomopolymere mit einem Schmelzpunkt von 155 bis 165°C, vorzugsweise 160 - 162°C und im allgemeinen einen Schmelzflußindex von 1 bis 10 g/10 min, vorzugsweise 2 bis 8 g/10 min, bei 230°C und einer Kraft von 21,6 N (DIN 53735) bevorzugt.

Ausführungsformen mit einer weißen ersten Zwischenschicht enthalten im allgemeinen 2 - 15 Gew.-%, vorzugsweise 3 - 10 Gew.-% TiO2. Geeignete TiO2 sind nachstehend im Zusammenhang mit der Basisschicht ausführlich beschrieben. Derartig eingefärbte Zwischenschichten wirken vorteilhaft als "optische" Barriere und verhindern das Durchscheinen der Metallschicht auf der gegenüberliegenden opaken Seite der Folie und verleihen der Folie auf dieser opaken Seite ein vorteilhaftes weißes Aussehen.

Die Folie zeichnet sich weiterhin durch Vakuolen in der Basisschicht aus, die der Folie ein opakes Aussehen verleihen. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Mehrschichtfolie enthält Polyolefin, vorzugsweise ein Propylenpolymer und vakuoleninitierende Füllstoffe sowie gegebenenfalls weitere übliche Additive in jeweils wirksamen Mengen. Im allgemeinen enthält die Basisschicht mindestens 70 Gew.-%, vorzugsweise 75 bis 98 Gew.-%, insbesondere 85 bis 95 Gew.-%, des Polyolefins, jeweils bezogen auf das Gewicht der Schicht. In einer weiteren Ausführungsform kann die Basisschicht zusätzlich Pigmente, insbesondere TiO₂ enthalten.

Als Polyolefine der Basisschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält vakuoleninitierende Füllstoffe im allgemeinen in einer Menge von maximal 30 Gew.-%, vorzugsweise 2 bis 25 Gew.- %, insbesondere 2 bis 15 Gew.-%, bezogen auf das Gewicht der Basisschicht.

Im Sinne der vorliegenden Erfindung sind vakuoleniniziierende Füllstoffe feste Teilchen, die mit der Polymermatrix unverträglich sind und beim Verstrecken der Folie zur Bildung von vakuolenartigen Hohlräumen führen, wobei Größe, Art und Anzahl der Vakuolen von der Menge und der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1 bis 4 µm. Der chemische Charakter der Teilchen spielt eine untergeordnete Rolle.

Übliche vakuoleninizüerende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren Ausführungsform kann die Basisschicht zusätzlich Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der Folie wird wesentlich von der Dichte der Basisschicht bestimmt. Die Dichte der vakuolenhaltigen Basisschicht, wird im allgemeinen durch die Vakuolen reduziert sein, sofern nicht größere Mengen an TiO2 den dichtereduzierenden Effekt der Valzuolen kompensieren. Im allgemeinen liegt die Dichte der opaken Basisschicht in einem Bereich von 0,45 - 0,85g/cm³. Die Dichte der Folie kann für die beschriebenen weiß-opaken Ausführungsformen in einem größeren Bereich variieren und liegt im allgemeinen in einem Bereich von 0,5 bis 0,95g/cm³, vorzugsweise 0,6 bis 0,9g/cm³. Die Dichte wird grundsätzlich durch Zusatz von TiO₂ erhöht, aber gleichzeitig durch die vakuoleninitierenden Füllstoffe in der Basisschicht erniedrigt. Für eine Basisschicht, welche kein dichteerhöhendes TiO₂ enthält liegt die Dichte der opaken Basisschicht vorzugsweise in einem Bereich von 0,45 bis 0,75 g/cm³, wohingegen für die weiß-opake Basisschicht der Bereich von 0,6 bis 0,9g/cm³ bevorzugt ist

Die Gesamtdicke der Folie liegt im allgemeinen in einem Bereich von 20 bis 100µm, vorzugsweise 25 bis 60 µm, insbesondere 30 bis 50µm. Die Dicke der Basisschicht beträgt entsprechend 10 bis 50µm, vorzugsweise 10 bis 40µm.

In einer weiteren bevorzugten Ausführungsform umfaßt die Folie noch weitere Schichten, die auf der gegenüberliegenden Seite der Basisschicht aufgebracht sind. Durch eine zweite Deckschicht resultieren vierschichtige Folien. Ausführungsformen die zusätzlich eine zweite Zwischenschicht und eine darauf aufgebrachte zweite Deckschicht aufweisen führen zu fünfschichtige Folien. In diesen Ausführungsformen beträgt die Dicke der zweiten Deckschicht im allgemeinen 0,5 - 3 µm, Zwischenschichten liegen im Bereich von 1 bis 8 µm. Kombinationen aus Zwischenschicht und Deckschicht haben vorzugsweise eine Gesamtdicke von 2 bis 8 µm. Als weitere Schichten sind siegelfähige Schichten bevorzugt, wobei hierunter sowohl heißsiegelfähige als auch kaltsiegelfähige Schichten verstanden werden. Kaltsiegelbeschichtungen können auch direkt auf die Oberfläche der Basisschicht aufgebracht werden. Im allgemeinen ist es jedoch bevorzugt die Basisschicht zunächst mit einer coextrudierten polymeren Deckschicht abzudecken und die Kaltsiegelbeschichtung auf diese polymere Deckschicht aufzubringen.

Die zusätzliche Deckschicht und Zwischenschicht enthalten im allgemeinen mindestens 80 Gew.-%, vorzugsweise 90 bis <100 Gew.% olefinische Polymere oder Mischungen daraus. Geeignete Polyolefine sind beispielsweise Polyethylene, Propylencopolymere und/oder Propylenterpolymere, sowie die bereits im Zusammenhang mit der Basisschicht beschrieben Propylenhomopolymeren.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94. g/cm³. Der Schmelzpunkt, gemessen mit DSC (Maximum der Schmelzkurve, Aufheizgeschwindigkeit 20 °C/min), liegt zwischen 115 und 130 °C.

Im Hinblick auf die Optik dieser Folienseite sind Ausführungsformen mit einer Propylenhomopolymer-Zwischenschicht und einer siegelfähigen Deckschicht bevorzugt. In diesem Fall ist die Zwischenschicht aus mindestens 80 Gew.-%, vorzugsweise 85 bis 98 Gew.-% Propylenhomopolymer aufgebaut und weißt eine Dicke von mindestens 2µm, vorzugsweise 2,5 bis 6 µm auf. Zur Verbesserung der Optik, insbesondere des Weißgrades, werden dieser Zwischenschicht die vorstehend für die Basisschicht beschriebenen Pigmente zugesetzt, insbesondere TiO2 in einer Menge von 2 bis 12 Gew.-%, vorzugsweise 3 bis 8 Gew.-% bezogen auf das Gewicht der Zwischenschicht.

Im allgemeinen sind auf derartig weiß eingefärbte Zwischenschichten Siegelschichten in einer Dicke von 0,3 bis 4 µm aufgebracht. Hierfür kommen übliche Siegelschichten aus Propylenco- oder Propylenterpolymeren in Frage. Geeignete Propylenco- oder Terpolymere sind im allgemeinen aus mindestens 50 Gew.-% Propylen und Ethylen und/oder Butyleneinheiten als Comonomer aufgebaut. Bevorzugt sind statistische Ethylen-Propylen-Copolymere mit einem Ethylengehalt von 2 bis 10 Gew.-%, bevorzugt 5 bis 8 Gew.%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Diese Ausführungsformen zeichnen sich durch eine besonders vorteilhafte Optik auf der der Metallschicht gegenüberliegenden Seite aus. Der Titandioxid-Zusatz verhindert wirksam einen Durchscheinen der Metallschicht, wodurch diese "opake" Seite der Folie gräulich erscheint und die weiße Optik beeinträchtigt.

Bei Einsatz der Folie als Verpackung für Schokoladen-Produkte wird entweder die metallisierte Seite (nach Auftrag eines Haftvermittlers) oder die Oberfläche der "opaken" Seite mit einem Kaltsiegelkleber versehen. Daneben kann die Folie als normale siegelfähige Folie eingesetzt werden, bei denen die Herstellung der Verpackung über Heißsiegelung erfolgt.

Gegebenenfalls kann die Folie auch als Beutelverpackung für pulverförmige Füllgüter eingesetzt werden. Für derartige Anwendungen wird für die zweite Zwischenschicht und gegebenenfalls für die zweite Deckschicht eine Mischung aus den beschriebenen Propylen-Co- und/oder Terpolymeren und Polyethylenen eingesetzt. Diese Mischungen sind im Hinblick auf die Siegeleigenschaften der Folie besonders vorteilhaft, wenn der Beutel zum Abpacken von pulverförmigem Füllgut eingesetzt wird. Mit den gängigen Verfahren zum Abpacken von Pulvern kann eine Verunreinigung der Siegelbereiche nicht wirksam verhindert werden. Diese Verunreinigungen führen häufig zu Problemen beim Siegeln. Die Siegelnähte haben in den kontaminierten Bereiche eine verringerte oder gar keine Festigkeit, die Dichtigkeit der Siegelnaht ist ebenfalls beeinträchtigt. Überraschenderweise stören die Verunreinigungen beim Siegeln nicht oder nur noch geringfügig, wenn die Zwischenschichten aus einer Mischung aus Propylenpolymeren und Polyethylenen aufgebaut sind. Hierfür sind HDPE und/oder MDPE haltige Deckschichtmischungen mit einem HDPE oder MDPE Anteil von 10 bis 50 Gew.-%, insbesondere 15 bis 40 Gew.-% besonders vorteilhaft.

In einer weiteren Anwendung kann die Folie zu einem erfindungsgemäße Laminat verarbeitet werden. Hierbei wird vorzugsweise die metallisierte Seite gegen eine opake oder transparente Polypropylen- oder Polyethylenfolie laminiert. Diese Verbunde werden bevorzugt für die Verpackung von fetthaltigen Lebensmitteln, z.B. Trockenpulver oder Snacks, eingesetzt.

Wie bereits erwähnt enthalten alle Schichten der Folie vorzugsweise Neutralisationsmittel und Stabilisatoren in jeweils wirksamen Mengen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

In einer bevorzugten Ausführungsform werden der zu metallisierenden Deckschicht als auch der gegenüberliegenden zweiten Deckschicht Antiblockmittel zugefügt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die vakuoleninitierenden Füllstoffe und andere gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird nach den an sich bekannten Verfahren auf der äußeren Oberfläche der ersten Deckschicht mit einer Metallschicht, vorzugsweise aus Aluminium versehen. Diese Metallisierung erfolgt in einer Vakuumkammer in der Aluminium verdampft und auf der Folienoberfläche niedergeschlagen wird. In einer bevorzugten Ausführungsform wird die zu metallisierende Oberfläche unmittelbar vor der Metallisierung einer Plasmabehandlung unterworfen. Die Dicke der Metallschicht korreliert im allgemeinen mit der optische Dichte der metallisierten Folie, d.h. je dicker die Metallschicht ist, umso höher ist die optischen Dichte der metallisierten Folie. Im allgemeinen sollte die optische Dichte der erfindungsgemäße metallisierte Folie mindestens 2, insbesondere 2,5 bis 4 betragen.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Optische Dichte

Die optische Dichte ist die Messung der Durchlässigkeit eines definierten Lichtstrahls. Die Messung wird mit einem Densitometer vom Typ TCX der Firma Tobias Associates Inc durchgeführt. Die optische Dichte ist ein Relativwert der dimensionslos angegeben wird.

### Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 50 %.

### Bestimmung des Ethylengehalts

Der Ethylengehalt der Copolymeren wird mittels ¹³C-NMR Spektroskopie bestimmt Die Messungen wurden mit einem Kemresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN 53 479, Verfahren A, bestimmt.

### Oberflächenspannung

Die Oberflächenspannung wurde mittels Tintenmethode nach DIN 53 364 bestimmt.

Die Erfindung wird nunmehr durch die nachfolgenden Beispiele erläutert.

### Beispiel 1:

Nach dem Coextrusionsverfahren wurde aus einer Breitschlitzdüse bei einer Extrusionstemperatur von 240 bis 270°C eine fünfschichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der ersten Deckschicht wurde mittels Corona zur Erhöhung der Oberflächenspannung vorbehandelt. Die fünfschichtige Folie hatte einen Schichtaufbau erste Deckschicht/erste Zwischenschicht/Basisschicht/zweite Zwischenschicht /zweite Deckschicht. Die einzelnen Schichten der Folie hatten die folgende Zusammensetzung:
Erste Deckschicht (0,5 µm):
~100 Gew.-% Ethylen-Propylencopolymerisat mit einem Ethylen-Anteil von 1,7 Gew.-% (bezogen auf das Copolymer) und einem Schmelzpunkt von 155 °C; und einem Schmetsfiußindex von 8,5 g/10 min bei 230 °C und 2,16 kg Belastung (DIN 53 735) und einer Schmelzeenthalpie von 96,9 J/g.

Erste Zwischenschicht (6,5µm)
∼100 Gew.% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735)

Basisschicht:
91,6 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und

| | |
|---|---|
| 6,0 Gew.-% | Calciumcarbonat, mittlerer Teilchendurchmesser ca. 2,7 µm |
| 2,4 Gew.-% | Titandioxid mittlerer Teilchendurchmesser von 0,1 bis 0,3 µm |

Zweite Zwischenschicht (3µm)
96,4 Gew.-% Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und
3,6 Gew.-% Titandioxid mittlerer Teilchendurchmesser von 0,1 bis 0,3 µm

Zweite Deckschicht (0,7 µm):
99,7 Gew.-% Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g
0,1 Gew.-% Antiblockmittel mit einem mittleren Teilchendurchmesser ca. 4µm (Sylobloc 45)

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

| | |
|---|---|
| Extrusion: | Extrusionstemperatur ca. 250 -270°C |
| Abkühiwalze: | Temperatur 30°C, |
| Längsstreckung: | T = 120 °C |
| Längsstreckung um den | Faktor 5 |
| Querstreckung: | T = 160 °C |
| Querstreckung um den | Faktor 9 |
| Fixierung | T = 100°C |

Die Folie wurde auf der Oberfläche der ersten Deckschicht mittels Corona oberflächenbehandelt und wies eine Oberflächenspannung von 38mN/m auf. Die Folie hatte eine Dicke von 35 µm und ein opakes Aussehen.

### Beispiel 2:

Es wurde eine Folie nach Beispiel 1 hergestellt. Im Unterschied zu Beispiel 1 enthielten die zweite Zwischenschicht kein TiO2. Die Zusammensetzungen der übrigen Schichten sowie die Herstellbedingungen wurden nicht geändert.

### Vergleichsbeispiel 1

Es wurde eine opake Folie nach Beispiel 1 hergestellt. Im Unterschied zu Beispiel 1 wurde die erste Zwischenschicht weggelassen, dh. die erste Deckschicht wurde direkt auf die Oberfläche der Basisschicht aufgebracht.

### Vergleichsbeispiel 2

Es wurde eine opake Folie nach Beispiel 1 hergestellt. Im Unterschied zu Beispiel 1 wurde in der ersten Deckschicht ein übliches Propylen-Copolymerisat eingesetzt.:
erste Deckschicht (0,5µm):
   ∼ 100 Gew.-% Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g

### Vergleichsbeispiel 3

Es wurde ein Folie wie Beispiel 2 hergestellt. Im Unterschied zu Beispiel 2 enthielt die Basisschicht keine vakuoleninitierenden Füllstoffe und kein Ti02 und auch die zweite Zwischenschicht kein TiO2. Im Ergebnis resultiere daraus eine dreischichtige Folie, da die Zwischenschichten und die Basisschicht nur aus Propylenhomopolymer bestanden.

Alle Folien nach den Beispielen und den Vergleichsbeispielen wurden in einer Vakuum Metallisieranlage auf der Oberfläche der ersten Deckschicht mit einer Aluminiumschicht beschichtet. Zur Verbesserung der Metallhaftung wurde die Oberfläche unmittelbar vor der Beschichtung einer Plasmabehandlung unterworfen. Die Eigenschaften der metallisierten Folien nach den Beispielen und den Vergleichsbeispielen sind in der Tabelle 1 zusammengestellt. Es zeigt sich, daß die erfindungsgemäßen Folien nach den Beispielen 1 und 2 hervorragende Barrierewerte gegen Wasserdampf und Sauerstoff und gleichzeitig auf der gegenüberliegenden Seite eine gute opake bzw. weiße Optik aufweisen.

| Beispiel | Dicke µm | Dichte der Folie g/cm³ | Optik* | WDD 38°C 90% rel. Feuchte *** | OTR 23°C, 50% rel. Feuchte *** |
|---|---|---|---|---|---|
| Bsp. 1 | 35 | 0,71 | ++ | 0,15 | 9 |
| Bsp. 2 | 35 | 0,71 | + | 0,14 | 10 |
| VB 1 | 35 | 0,71 | ++ | 0,5 | >100 |
| VB 2 | 35 | 0,71 | ++ | 0,5 | 135 |
| VB 3 | 35 | 0,91 | transparent | 0,3 | 30 |

| | | | | | |
|---|---|---|---|---|---|
| * qualitative Beurteilung des Durchscheinen der Metallschicht auf der gegenüberliegenden Seite *** nach Metallisierung | | | | | |

## Patentansprüche

1. Verwendung einer metallisierten, coextrudierten, mehrschichtigen, biaxial orientierten Polypropylenmehrschichtfolie zur Herstellung einer Verpackung mit einer Barriere gegenüber Wasserdampf und Sauerstoff, welche eine vakuolenhaltige Basisschicht aufweist, wobei diese vakuolenhaltige Basisschicht durch eine oder mehrere Schichten abdeckt ist und die Dicke dieser abdeckenden Schicht oder Schichten insgesamt mindestens 3µm beträgt und die Folie auf der äußeren Oberfläche dieser abdeckenden Schicht oder Schichten metallisiert ist und die metallisierte Folie eine Wasserdampfdurchlässigkeit ≤ 0,5 g/m²*Tag bei 38°C und 90% relativer Luftfeuchte und eine Sauerstoffdurchlässigkeit von ≤50 cm³/m²*Tag*bar bei 23°C und 50% relativer Luftfeuchte, aufweist

2. Verwendung einer Folie nach Anspruch 1, **dadurch gekennzeichnet, daß** eine abdeckende Schicht als Deckschicht auf der Basisschicht aufgebracht ist.

3. Verwendung einer Folie nach Anspruch 1, **dadurch gekennzeichnet, daß** eine Zwischenschicht und eine erste Deckschicht als abdeckende Schichten auf der Basisschicht aufgebracht sind.

4. Verwendung einer Folie nach einem der Ansprüche 1 bis 3, **dadurch gekennzeichnet, daß** die Deckschicht und/oder die Zwischenschicht mindestens 80 Gew.-% Propylenhomopolymeren, Ethylenhomopolymeren, Propylen-Copolymer mit weniger als 3 Gew.-% Comonomer oder Ethylen-Copolymer mit weniger als 3 Gew.- % Comonomer oder eine Mischung dieser Polymeren enthält.

5. Verwendung einer Folie nach Anspruch 4, **dadurch gekennzeichnet, daß** das Comonomere des Propylencopolymeren Ethylen oder Butylen ist.

6. Verwendung einer Folie nach Anspruch 5, **dadurch gekennzeichnet, daß** das Propylencopolymer ein Propylen-Ethylen-Copolymer mit einem Ethylengehalt von <2,5 Gew.-% und einem Schmelzpunkt von 150 bis 160 °C ist.

7. Verwendung einer Folie nach Anspruch 4, **dadurch gekennzeichnet, daß** das Propylenhomopolymer ein isotaktisches Propylenhomopolymer mit einem Schmelzpunkt von 159 bis 162°C oder ein hochisotaktische Propylenhomopolymer mit einer Isotaktizität von mehr als 97% oder ein mittels Metallocen Katalysatoren hergestelltes Propylenhomopolymer ist.

8. Verwendung einer Folie nach einem der Ansprüche 1 bis 7, **dadurch gekennzeichnet, daß** die Basisschicht aus Propylenhomopolymer aufgebaut ist und 2 bis 15 Gew.-% vakuoleninitierende Füllstoffe enthält und eine Dichte von 0,45 - 0,85 cm³/g aufweist.

9. Verwendung einer Folie nach einem der Ansprüche 1 bis 8, **dadurch gekennzeichnet, daß** die optische Dichte der metallisierten Folie mindestens 2,0 beträgt.

10. Verwendung einer Folie nach Anspruch 9, **dadurch gekennzeichnet, daß** die optische Dichte 2,5 bis 5 beträgt.

11. Verwendung einer Folie nach Anspruch 10, **dadurch gekennzeichnet, daß** Folie eine zweite Deckschicht aus Propylenhomopolymer, Polyethylenhomopolymer oder Propylenco- und/oder Propylenterpolymere enthält.

12. Verwendung einer Folie nach Anspruch 11, **dadurch gekennzeichnet, daß** die zweite Deckschicht siegelfähig ist und eine Dicke von 0,3 bis 4 µm ausweist.

13. Verwendung einer Folie nach Anspruch 12, **dadurch gekennzeichnet, daß** zwischen der Basisschicht und der zweiten Deckschicht eine zweite Zwischenschicht angebracht ist.

14. Verwendung einer Folie nach Anspruch 2, **dadurch gekennzeichnet, daß** die erste Deckschicht eine Dicke von 4 bis 8 µm aufweist.

15. Verwendung einer Folie nach Anspruch 3, **dadurch gekennzeichnet, daß** die Zwischenschicht eine Dicke von mindestens 3,5 µm und die erste Deckschicht eine Dicke von mindestens 0,5µm aufweist.

16. Verwendung einer Folie nach Anspruch 15, **dadurch gekennzeichnet, daß** die Zwischenschicht eine Dicke von mindestens 4 bis 10µm und die Deckschicht eine Dicke von mindestens 0,8 bis 3µm aufweist.

17. Verwendung einer metallisierte, coextrudierten mehrschichtigen, biaxial orientierte Polypropylenmehrschichtfolie, welche eine vakuolenhaltigen Basisschicht aufweist, wobei diese vakuolenhaltige Basisschicht durch eine oder mehrere Schichten abdeckt ist und die Dicke dieser abdeckenden Schicht oder Schichten insgesamt mindestens 3µm beträgt und die Folie auf der äußeren Oberfläche dieser abdeckenden Schicht oder Schichten metallisiert ist und die metallisierte Folie eine Wasserdampfdurchlässigkeit ≤ 0,5 g/m²*Tag bei 38°C und 90% relativer Luftfeuchte und eine Sauerstoffdurchlässigkeit von ≤50 cm³/m²*Tag*bar bei 23°C und 50% relativer Luftfeuchte, aufweist, zur Herstellung eines Laminats, **dadurch gekennzeichnet, daß** die metallisierte Seite der Folie gegen eine weitere Polypropylenfolien oder gegen eine Polyethylenfolie kaschiert wird.

18. Verwendung nach Anspruch 17, **dadurch gekennzeichnet, daß** eine abdeckende Schicht als Deckschicht auf der Basisschicht aufgebracht ist.

19. Verwendung nach Anspruch 17, **dadurch gekennzeichnet, daß** eine Zwischenschicht und eine erste Deckschicht als abdeckende Schichten auf der Basisschicht aufgebracht sind.

20. Verwendung nach Anspruch 18, **dadurch gekennzeichnet, daß** die erste Deckschicht eine Dicke von 4 bis 8 µm aufweist.

21. Verwendung nach Anspruch 19, **dadurch gekennzeichnet, daß** die Zwischenschicht eine Dicke von mindestens 3,5 µm und die erste Deckschicht eine Dicke von mindestens 0,5µm aufweist.

22. Verwendung nach Anspruch 21, **dadurch gekennzeichnet, daß** die Zwischenschicht eine Dicke von mindestens 4 bis 10µm und die Deckschicht eine Dicke von mindestens 0,8 bis 3µm aufweist.

## Claims

1. Use of a metallised, coextruded, laminated, biaxially-oriented polypropylene multilayer film in the manufacture of packaging with a barrier against water vapour and oxygen, featuring a vacuolated base layer, in which this vacuolated base layer is covered with one or several layers and the thickness of this covering layer or layers comes to at least 3µm in total, and the film on the outer surface of this/these covering layer or layers is metallised and the metallised film has a permeability to water vapour of ≤0.5 g/m² (day) at 38°C and 90% relative humidity and a permeability to oxygen of ≤50 cm³/m² (day, bar) at 23°C and 50% relative humidity.

2. Use of a film according to claim 1, **characterised in that** a covering layer is attached as an overlay on top of the base layer.

3. Use of a film according to claim 1, **characterised in that** an intermediate layer and a first overlay are attached as covering layers on top of the base layer.

4. Use of a film according to one of the claims 1 to 3, **characterised in that** the overlay and/or the intermediate layer contain at least 80% by weight propylene homopolymers, ethylene homopolymers and propylene copoylmers with less than 3% by weight comonomers or ethylene copolymers with less than 3% by weight comonomers or a mixture of these polymers.

5. Use of a film according to claim 4, **characterised in that** the comonomer of the propylene copolymers is ethylene or butylene.

6. Use of a film according to claim 5, **characterised in that** the propylene copolymer is a propylene-ethylene copolymer with an ethylene content of <2.5% by weight and a melting point of 150 to 160°C.

7. Use of a film according to claim 4, **characterised in that** the propylene homopolymer is an isotactic propylene homopolymer with a melting point of 159 to 162°C, or a high isotactic propylene homopolymer with an isotacticity of more than 97%, or a propylene homopolymer produced by means of metallocene catalysts.

8. Use of a film according to one of the claims 1 to 7, **characterised in that** the base layer is made of propylene homopolymer and contains 2 to 15% by weight vacuole-creating fillers and has a density of 0.45 - 0.85 cm³/g.

9. Use of a film according to one of the claims 1 to 8, **characterised in that** the optical density of the metallised film comes to at least 2.0.

10. Use of a film according to claim 9, **characterised in that** the optical density comes to between 2.5 and 5.

11. Use of a film according to claim 10, **characterised in that** the film contains a second overlay made of propylene homopolymer, polyethylene homopolymer or propylene copolymers and/or propylene terpolymers.

12. Use of a film according to claim 11, **characterised in that** the second overlay is sealable and has a thickness of 0.3 to 4µm.

13. Use of a film according to claim 12, **characterised in that** between the base layer and the second overlay an intermediate layer is attached.

14. Use of a film according to claim 2, **characterised in that** the first overlay has a thickness of 4 to 8µm.

15. Use of a film according to claim 3, **characterised in that** the intermediate layer has a thickness of at least 3.5µm and the first overlay a thickness of at least 0.5µm.

16. Use of a film according to claim 15, **characterised in that** the intermediate layer has a thickness of at least 4 to 10µm and the overlay a thickness of at least 0.8 to 3µm.

17. Use of a metallised, coextruded, laminated, biaxially-oriented polypropylene multilayer film, which features a vacuolated base layer, in which this vacuolated base layer is covered with one or several layers and the thickness of this/these layer or layers comes to at least 3µm in total, and the film on the outer surface of this/these covering layer or layers is metallised and the metallised film has a permeability to water vapour of ≤0.5 g/m2 (day) at 38°C and 90% relative humidity and a permeability to oxygen of ≤50 cm3/m2 (day, bar) at 23°C and 50% relative humidity, for the manufacture of a laminate, **characterised in that** the metallised side of the film is covered against a further polypropylene film or against a polyethylene film.

18. Use according to claim 17, **characterised in that** a covering layer is attached as an overlay on the base layer.

19. Use according to claim 17, **characterised in that** an intermediate layer and a first overlay are attached to the base layer as covering layers.

20. Use according to claim 18, **characterised in that** the first covering layer has a thickness of 4 to 8µm.

21. Use according to claim 19, **characterised in that** the intermediate layer has a thickness of at least 3.5µm and the first overlay has a thickness of at least 0.5µm.

22. Use according to claim 21, **characterised in that** the intermediate layer has a thickness of at least 4 to 10µm and the overlay has a thickness of at least 0.8 to 3µm.

## Revendications

1. Utilisation d'un film de polypropylène multicouche métallisé, coextrudé, orienté biaxialement, destiné à la fabrication d'un conditionnement doté d'une barrière contre la vapeur d'eau et l'oxygène, présentant une couche de base qui contient des vacuoles, cette couche de base étant recouverte par une ou plusieurs autres couche(s) couvrante(s) dont l'épaisseur s'élève au total à 3µm au moins et le film au niveau de la surface externe de cette couche ou de ces couches couvrante(s) étant métallisé, le film métallisé présentant une perméabilité à la vapeur d'eau ≤ 0,5 g/m²*jour à 38°C et une humidité de l'air relative de 90 % ainsi qu'une perméabilité à l'oxygène ≤ 50 cm³/m²*jour*bars à 23°C et une humidité de l'air relative de 50 %.

2. Utilisation d'un film selon la revendication 1, **caractérisée en ce qu'**une couche couvrante est positionnée sous forme de couche de couverture au-dessus de la couche de base.

3. Utilisation d'un film selon la revendication 1, **caractérisée en ce qu'**une couche intermédiaire et une première couche de couverture sont positionnées sous forme de couches couvrantes au-dessus de la couche de base.

4. Utilisation d'un film selon l'une des revendications 1 à 3, **caractérisée en ce que** la couche de couverture et/ou la couche intermédiaire contient au moins 80 % en poids d'un homopolymère de propylène, d'un homopolymère d'éthylène, d'un copolymère de propylène avec moins de 3 % en poids d'un comonomère ou d'un copolymère d'éthylène avec moins de 3 % en poids d'un comonomère, ou un mélange de ces polymères.

5. Utilisation d'un film selon la revendication 4, **caractérisée en ce que** le comonomère du copolymère de propylène est de l'éthylène ou du butylène.

6. Utilisation d'un film selon la revendication 5, **caractérisée en ce que** le copolymère de propylène est un copolymère d'éthylène-propylène, qui présente une teneur en éthylène < 2,5 % en poids et un point de fusion compris entre 150 et 160°C.

7. Utilisation d'un film selon la revendication 4, **caractérisée en ce que** l'homopolymère de propylène est un homopolymère de propylène isotactique avec un point de fusion compris entre 159 et 162°C ou un homopolymère de propylène hautement isotactique dont l'isotacticité est supérieure à 97 % ou un homopolymère de propylène préparé au moyen d'un catalyseur métallocène.

8. Utilisation d'un film selon l'une des revendications 1 à 7, **caractérisée en ce que** la couche de base composée de l'homopolymère de propylène contient 2 à 15 % en poids de la charge à l'origine des vacuoles et présente une densité de 0,45 à 0,85 cm³/g.

9. Utilisation d'un film selon l'une des revendications 1 à 8, **caractérisée en ce que** la densité optique du film métallisé s'élève au moins à 2,0.

10. Utilisation d'un film selon la revendication 9, **caractérisée en ce que** la densité optique est comprise entre 2,5 et 5.

11. Utilisation d'un film selon la revendication 10, **caractérisée en ce que** le film présente une seconde couche de couverture à base d'un homopolymère de propylène, d'un homopolymère de polyéthylène ou d'un copolymère de propylène et/ou d'un terpolymère de propylène.

12. Utilisation d'un film selon la revendication 11, **caractérisée en ce que** la seconde couche de couverture est scellable et présente une épaisseur comprise entre 0,3 et 4 µm.

13. Utilisation d'un film selon la revendication 12, **caractérisée en ce qu'**une seconde couche intermédiaire est insérée entre la couche de base et la seconde couche de couverture.

14. Utilisation d'un film selon la revendication 2, **caractérisée en ce que** la première couche de couverture présente une épaisseur comprise entre 4 et 8 µm.

15. Utilisation d'un film selon la revendication 3, **caractérisée en ce que** la couche intermédiaire présente une épaisseur d'au moins 3,5 µm et la première couche de couverture une épaisseur d'au moins 0,5 µm.

16. Utilisation d'un film selon la revendication 15, **caractérisée en ce que** la couche intermédiaire présente une épaisseur d'au moins 4 à 10 µm et la couche de couverture une épaisseur d'au moins 0,8 à 3 µm.

17. Utilisation d'un film de polypropylène multicouche métallisé, coextrudé, orienté biaxialement, présentant une couche de base qui contient des vacuoles, cette couche de base étant recouverte par une ou plusieurs autres couche(s) couvrante(s) dont l'épaisseur s'élève au total à 3µm au moins et le film au niveau de la surface externe de cette couche ou de ces couches couvrante(s) étant métallisé, le film métallisé présentant une perméabilité à la vapeur d'eau ≤ 0,5 g/m²*jour à 38°C et une humidité de l'air relative de 90 % ainsi qu'une perméabilité à l'oxygène ≤ 50 cm³/m²*jour*bars à 23°C et une humidité de l'air relative de 50 %, destiné à la fabrication d'un pelliculage, **caractérisé en ce que** le côté métallisé du film est recouvert d'un autre film de polypropylène ou d'un film de polyéthylène.

18. Utilisation selon la revendication 17, **caractérisée en ce qu'**une couche couvrante est positionnée sous forme de couche de couverture au-dessus de la couche de base.

19. Utilisation selon la revendication 17, **caractérisée en ce qu'**une couche intermédiaire et une première couche de couverture sont positionnées sous forme de couches couvrantes au-dessus de la couche de base.

20. Utilisation selon la revendication 18, **caractérisée en ce que** la première couche de couverture présente une épaisseur comprise entre 4 et 8 µm.

21. Utilisation selon la revendication 19, **caractérisée en ce que** la couche intermédiaire présente une épaisseur d'au moins 3,5 µm et la première couche de couverture une épaisseur d'au moins 0,5 µm.

22. Utilisation selon la revendication 21, **caractérisée en ce que** la couche intermédiaire présente une épaisseur d'au moins 4 à 10 µm et la couche de couverture une épaisseur d'au moins 0,8 à 3 µm.
